# EUROPEAN PATENT SPECIFICATION

(11) **EP 0 330 281 B1**
(45) Date of publication and mention of the grant of the patent: **15.06.1994**
(21) Application number: 89200418.5
(22) Date of filing: 17.02.1989
(51) Int. Cl.: C08L 57/10, C09D 157/10, C09J 157/10

(54) **Pigmentable binder composition**
Pigmentierbare Bindemittel-Zusammensetzung
Composition de liant pigmentable

(30) Priority: 22.02.1988 GB 8804034; 27.04.1988 GB 8810008
(43) Date of publication of application: 30.08.1989
(73) Proprietor: SHELL INTERNATIONALE RESEARCH MAATSCHAPPIJ B.V., 2596 HR Den Haag (NL)
(72) Inventor: Vonk, Willem Cornelis, NL-1031 CM Amsterdam (NL); van Gooswilligen, Gerrit, NL-1031 CM Amsterdam (NL); Korenstra, Jan, NL-1031 CM Amsterdam (NL)

(56) References cited:
- EP-A- 0 074 273
- EP-A- 0 179 510
- EP-A- 0 211 103
- DE-A- 3 216 388
- DE-A- 3 635 283
- FR-A- 1 469 702
- HOST EPOQUE, FILE WPI, AN 74-08328V [05], Derwent Publications Ltd, London, GB & JP-A-49 001 302 (FUJI PAVEMENT)
- WPIL/Derwent Soviet Inventions Week D41 & SU-A-796213

## Description

This invention relates to a pigmentable binder composition for use in the manufacture of pigmented surface coating or sealing material such as roofing felt, road dressing and marking compositions, sealants, pipe coatings and specialist surfaces such as cycle tracks and courts for sports activities.

Binder compositions which are pigmentable are known from UK P 1.226.234 which discloses compositions including an oil, a petroleum resin, a coumarone-indene resin and a thermoplastic rubber. European Patent Application 0179510 discloses similar mixtures in which the petroleum resin and/or the coumarone-indene resin is modified to the extent that they contain carboxylic acid, carboxylic acid anhydride or hydroxyl groups. These compositions are compatible with pigments and with fillers and/or aggregates.

FR-A-1469702 describes a process for the preparation of agglomerated materials comprising the mixing of a hydrocarbon binder such as atactic polypropylene with crushed rocks, particularly siliceous rocks, pre-treated by coating with a tension-reducing, hydraulic substance such as "Portland" cement or "Portland" clinker.

EP-A-211103 describes a process for the preparation of a road surfacing material in which heated, granular mineral material is coated firstly with an amorphous copolymer of an alpha olefin and then with bitumen.

In order to produce a wide range of coloured surface coating or sealing materials, principally for use under all weather conditions, the nature, type and proportions of sand, aggregate, and mineral filler which are incorporated into the binder composition along with an appropriate pigment, vary to a large degree, but of course are dictated by the end-use of the surface coating or sealing material. For example, in the manufacture of roofing felt, sand and an appropriate aggregate and/or filler can be blended with a binder composition and a pigment at an elevated temperature and coated on a membrane in a manner similar to the manufacture of bituminous roofing felt.

Hitherto brightly-coloured bituminous surface coating or sealing materials which can withstand a wide range of climatic conditions over extended periods of time have not been available in large or economically- viable quantities. There is an increasing demand by designers and architects for materials, especially roofing materials, which can be pigmented and which are as reliable as conventional bituminous or asphaltic-based materials.

We have now found a very useful pigmentable binder composition in that it can be mixed effectively with aggregate, mineral and other fillers and pigments to produce pigmented material for surface dressing, road-marking, roofing, waterproofing, sealing and other purposes, and in that the pigmented material has good weatherability and therefore can be used over a wide range of climatic conditions.

According to the present invention, a pigmentable binder composition comprises a mineral lubricating oil derivative and a modified hydrocarbon resin containing carboxylic acid, carboxylic acid anhydride or hydroxyl groups, characterised in that the composition also includes as a further component an amorphous homopolymer or copolymer of an alpha olefin. This binder composition possesses high-temperature stability and resistance to low-temperature brittleness and can be readily blended with a wide range of aggregate, mineral and other fillers and pigments to produce brightly- pigmented coating or sealing materials.

The amorphous alpha olefin polymer is suitably atactic polypropylene, an amorphous copolymer of propylene, butene-1 and optionally a minor proportion of ethylene, or mixtures thereof. When atactic polypropylene (APP) is used in the binder composition according to the invention, this may be pure material or may be by-product material obtained from the manufacture of isotactic polypropylene. When a propylene/butene-1 copolymer is used, this may contain from 0 to 15% of units derived from ethylene with the remainder derived from propylene and butene-1, preferably in the proportions of 60 to 70% by weight from one and the remainder from the other. Suitable materials are described in US Patent 4707413 (Col. 3, reference copolymer (a)), and are commercially available as "Vestoplast". The amount of amorphous alpha olefin polymer in the binder composition can be in the range 5 to 40% by weight, preferably in the range 10 to 30% by weight.

Suitable mineral lubricating oil derivatives are obtained by solvent-extraction of a mineral lubricating oil or of a Bright-Stock. Suitable solvents are e.g. phenol, liquid sulphur dioxide and in particular furfural. Other suitable materials include heavy distillate and deasphalted oil. These derivatives may be used in proportions of 30-99%w, preferably 60-95%w, based on the binder composition.

Suitable hydrocarbon resins include petroleum resins and coumarone-indene resins. Petroleum resins may be prepared by polymerization of unsaturated hydrocarbons present in unsaturated petroleum fractions, such as thermally cracked fractions and unsaturated hydrocarbons obtained in the pyrolysis of hydrocarbons.

Coumarone-indene resins may be prepared by polymerization of unsaturated hydrocarbons present in coal tar distillates.

The resins can then be modified by, for example treating them with unsaturated carboxylic acids or anhydrides, in particular maleic anhydride, or by mild oxidation. They may also be obtained by modifying the preparation of the resins, e.g. by polymerization of unsaturated hydrocarbons in the presence of unsaturated carboxylic acids or anhydrides, in particular maleic anhydride, or in the presence of hydroxyl group containing unsaturated carboxylic acids or esters thereof, such as hydroxyethylmethacrylate.

The resin component of the binder composition conveniently has an acid value in the range 1-100, preferably in the range 5-50 mg KOH/g, and is suitably present in the range of 1 to 70% by weight, preferably 5-40% by weight.

The mineral lubricating oil derivative and the resin component may be blown partially or completely before being blended with the amorphous alpha olefin polymer.

It has also been found that, surprisingly, the binder composition according to the present invention can have incorporated therein an inert filler material, for example ground lime-stone, up to above 40%, e.g. 10-30%, by weight without having any deleterious effects on the properties of the binder composition.

The pigmentable binder composition may also contain minor proportions, e.g. 0-30% by weight preferably 0.5-10% by weight, of other components such as blown or unblown bitumen; flux oil; natural or synthetic rubber e.g. optionally-hydrogenated, linear or branched, e.g. star-shaped, block copolymers of styrene and a conjugated diene (e.g. butadiene or isoprene); waxes, such as paraffin waxes; tackyfiers, such as Li salts of C₁₀₋₄₀ (hydroxy) fatty acids, e.g. Li (hydroxy) stearate to render the binder composition self-adhesive.

The pigmentable binder composition can be prepared by established techniques for the intimate mixing of components of the type employed in the composition according to the invention, e.g. by means of a blender mixer at elevated temperatures.

The surface coating or sealing material in which the pigmentable binders may be used usually contain mineral aggregates and fillers, in proportions of e.g. 5-98 %w, preferably 20-95%w, based on the coating or sealing material. Suitable mineral aggregates are stone chips, gravel, slag and sand. Suitable fillers are mineral dusts, ground chalk, ground limestone and talc.

The pigmentable binders according to the present invention may be present in proportions of e.g. 1-15%w, preferably 4-8%w, based on the coating or sealing material.

Pigments may be used in proportions of 0-10%w, preferably 0.05-2%w, based on the coating or sealing material. Suitable pigments are e.g. red and yellow iron oxides, titanium oxide (white), chromex green, cobalt blue, etc.

According to a further feature of the present invention, there is provided a pigmented surface coating or sealing material characterised in that it is a blend of the pigmentable binder composition according to the invention, a pigment and a mineral aggregate and/or filler.

The present invention is further illustrated by the following Examples:

### Examples 1 to 4

A Bright-Stock furfural extract (BFE) was mixed with a modified coumarone-indene resin and with one of the following polymers in a mixer at 180°C for 30 minutes:-
(a) Poly alpha-olefin (propylene/butene-1 copolymer available as "Vestoplast")(trade name)
(b) By-product atactic polypropylene blend (APP) obtained ex DERBIT
(c) Thermoplastic Rubber - Styrene/butadiene star copolymer containing 30% styrene ("CARIFLEX" TR1184)(trade name)

The resulting binder compositions were tested and the results presented in Table A

**Table A**

| Composition | Comparative Ex. | Ex 1 | Ex 2 | Ex 3 |
|---|---|---|---|---|
| BFE | 62 | 49 | 56 | 49 |
| Coumarone-Indene Resin-modified | 26 | 21 | 24 | 21 |
| "Vestoplast" (trade name) | - | 30 | 20 | - |
| APP Blend | - | - | - | 30 |
| Thermoplastic Rubber | 12 | - | - | - |

| Properties | | | | |
|---|---|---|---|---|
| Softening Point (ASTM D 36°C) | 81.6 | 146.5 | 136.9 | 150.3 |
| Cold Bending (DIN 52123°C) | -30 | -30 | -25 | -30 |
| Flow Resistance (DIN 52123°C) | 65 | >145 | 135 | >145 |
| Penetration at 25°C (ASTM D5 0.1mm) | 76 | 49 | 56 | 41 |

From the results presented in Table A it can be seen that the pigmentable composition according to the invention has markedly superior properties over the composition employing a thermoplastic rubber.

### Examples 4 to 6

A Bright-Stock furfural extract was blended with a modified coumarone-indene resin and "Vestoplast" (trade name) and also pulverised limestone in a mixer at 180°C for 30 minutes.

The binder compositions of varying concentrations of limestone were tested and their properties are given in Table B below:

**Table B**

| Composition | Ex 2 | Ex 4 | Ex 5 | Ex 6 |
|---|---|---|---|---|
| BFE | 56 | 50 | 48 | 39 |
| Coumarone-Indene resin-modified | 24 | 22 | 20 | 17 |
| "Vestoplast" (trade name) | 20 | 18 | 16 | 14 |
| Limestone | 0 | 10 | 20 | 30 |

| Properties | | | | |
|---|---|---|---|---|
| Softening Point [°C] | 136.9 | 136.1 | 136.0 | 140.1 |
| Cold Bending [°C] | -25 | -25 | -25 | -25 |
| Flow Resistance [°C] | 135 | 140 | 145 | 150 |
| Penetration [0.1mm] | 56 | 54 | 49 | 39 |

From the results presented in Table B it can be seen that the presence of limestone surprisingly has no significant effect on the softening point, cold bending and flow resistance properties.

## Claims (Claims for the following Contracting State(s): DE, GB, FR, IT, NL, SE, CH, LI, BE, AT, LU, GR)

1. A pigmentable binder composition comprising a mineral lubricating oil derivative and a modified hydrocarbon resin containing carboxylic acid, carboxylic acid anhydride or hydroxyl groups, characterised in that the composition also includes as a further component an amorphous homopolymer or copolymer of an alpha-olefin.

2. Binder composition as claimed in claim 1 wherein the further component is atactic polypropylene, an amorphous copolymer of propylene, butene-1 and optionally a minor proportion of ethylene, or mixtures thereof.

3. Binder composition as claimed in claim 1 or 2 characterised in that the amount of amorphous alpha olefin polymer is in the range 5 to 40% by weight of the composition.

4. Binder composition as claimed in claim 1, 2 or 3 characterised in that the hydrocarbon resin is a petroleum resin or a coumarone-indene resin.

5. Binder composition as claimed in claim 4 characterised in that the resin component has an acid value in the range 1 to 100 mg KOH/g.

6. Binder composition as claimed in any one of claims 1 to 5 characterised in that the resin component is present in the range 1 to 70% by weight of the composition.

7. Binder composition as claimed in any one of the preceding claims characterised in that the mineral lubricating oil derivative is Bright-Stock furfural extract.

8. Binder composition as claimed in any one of the preceding claims characterised in that the mineral lubricating oil derivative is employed in the range 30 to 99% by weight of the composition.

9. Binder composition as claimed in any one of the preceding claims characterised in that an inert filler is included in the composition.

10. A pigmented surface coating or sealing material characterised in that it is a blend of the pigmentable binder claimed in any one of the preceding claims, a pigment and a mineral aggregate or filler.

## Claims (Claims for the following Contracting State(s): ES)

1. A process for the preparation of a pigmentable binder composition which comprises mixing a mineral lubricating oil derivative, a modified hydrocarbon resin containing carboxylic acid, carboxylic acid anhydride or hydroxyl groups, and, as a further component, an amorphous homopolymer or copolymer of an alpha-olefin.

2. A process as claimed in claim 1 wherein the further component is atactic polypropylene, an amorphous copolymer of propylene, butene-1 and optionally a minor proportion of ethylene, or mixtures thereof.

3. A process as claimed in claim 1 or 2 characterised in that the amount of amorphous alpha olefin polymer is in the range 5 to 40% by weight of the composition.

4. A process as claimed in claim 1, 2 or 3 characterised in that the hydrocarbon resin is a petroleum resin or a coumarone-indene resin.

5. A process as claimed in claim 4 characterised in that the resin component has an acid value in the range 1 to 100 mg KOH/g.

6. A process as claimed in any one of claims 1 to 5 characterised in that the resin component is present in the range 1 to 70% by weight of the composition.

7. A process as claimed in any one of the preceding claims characterised in that the mineral lubricating oil derivative is Bright-Stock furfural extract.

8. A process as claimed in any one of the preceding claims characterised in that the mineral lubricating oil derivative is employed in the range 30 to 99% by weight of the composition.

9. A process as claimed in any one of the preceding claims characterised in that an inert filler is included in the composition.

10. A process for the preparation of a pigmented surface coating or sealing material characterised by blending the pigmentable binder claimed in any one of the preceding claims with a pigment and a mineral aggregate or filler.

## Patentansprüche (Patentansprüche für folgende(n) Vertragsstaat(en): DE, GB, FR, IT, NL, SE, CH, LI, BE, AT, LU, GR)

1. Pigmentierbare Bindemittelzusammensetzung mit einem Gehalt an einem Mineralschmierölderivat und einem Carbonsäure-, Carbonsäureanhydrid- oder Hydroxylgruppen enthaltenden modifizierten Kohlenwasserstoffharz, dadurch gekennzeichnet, daß die Zusammensetzung auch als eine weitere Komponente ein amorphes Homopolymer oder Copolymer eines α-Olefins einschließt.

2. Bindemittelzusammensetzung nach Anspruch 1, worin die weitere Komponente ataktisches Polypropylen, ein amorphes Copolymer aus Propylen, Buten-1 und gegebenenfalls einem kleinen Anteil Ethylen, oder ein Gemisch hievon ist.

3. Bindemittelzusammensetzung nach Anspruch 1 oder 2, dadurch gekennzeichnet, daß die Menge an amorphem α-Olefin-Polymer im Bereich von 5 bis 40 Gew.-% der Zusammensetzung liegt.

4. Bindemittelzusammensetzung nach Anspruch 1, 2 oder 3, dadurch gekennzeichnet, daß das Kohlenwasserstoffharz ein Erdölharz oder ein Cumaron-Inden-Harz ist.

5. Bindemittelzusammensetzung nach Anspruch 4, dadurch gekennzeichnet, daß die Harzkomponente eine Säurezahl im Bereich von 1 bis 100 mg KOH/g aufweist.

6. Bindemittelzusammensetzung nach einem der Ansprüche 1 bis 5, dadurch gekennzeichnet, daß die Harzkomponente im Ausmaß von 1 bis 70 Gew.-% der Zusammensetzung vorliegt.

7. Bindemittelzusammensetzung nach einem der vorstehenden Ansprüche, dadurch gekennzeichnet, daß das Mineralschmierölderivat ein Bright-Stock-Furfural-Extrakt ist.

8. Bindemittelzusammensetzung nach einem der vorstehenden Ansprüche, dadurch gekennzeichnet, daß das Mineralschmierölderivat im Bereich von 30 bis 99 Gew.-% der Zusammensetzung verwendet wird.

9. Bindemittelzusammensetzung nach einem der vorstehenden Ansprüche, dadurch gekennzeichnet, daß in der Zusammensetzung ein inerter Füller eingeschlossen ist.

10. Pigmentiertes Oberflächenüberzugs- oder -dichtungsmaterial, dadurch gekennzeichnet, daß es ein Gemisch aus dem pigmentierbaren Bindemittel nach einem der vorstehenden Ansprüche, einem Pigment und einem Mineralaggregat oder Füller ist.

## Patentansprüche (Patentansprüche für folgende(n) Vertragsstaat(en): ES)

1. Verfahren zur Herstellung einer pigmentierbaren Bindemittelzusammensetzung, welches ein Vermischen eines Mineralschmierölderivats, eines Carbonsäure-, Carbonsäureanhydrid- oder Hydroxylgruppen enthaltenden modifizierten Kohlenwasserstoffharzes und, als weiterer Komponente, eines amorphen Homopolymers oder Copolymers eines α-Olefins umfaßt.

2. Verfahren nach Anspruch 1, worin die weitere Komponente ataktisches Polypropylen, ein amorphes Copolymer aus Propylen, Buten-1 und gegebenenfalls einem kleinen Anteil Ethylen, oder ein Gemisch hievon ist.

3. Verfahren nach Anspruch 1 oder 2, dadurch gekennzeichnet, daß die Menge an amorphem α-Olefin-Polymer im Bereich von 5 bis 40 Gew.-% der Zusammensetzung liegt.

4. Verfahren nach Anspruch 1, 2 oder 3, dadurch gekennzeichnet, daß das Kohlenwasserstoffharz ein Erdölharz oder ein Cumaron-Inden-Harz ist.

5. Verfahren nach Anspruch 4, dadurch gekennzeichnet, daß die Harzkomponente eine Säurezahl im Bereich von 1 bis 100 mg KOH/g aufweist.

6. Verfahren nach einem der Ansprüche 1 bis 5, dadurch gekennzeichnet, daß die Harzkomponente im Ausmaß von 1 bis 70 Gew.-% der Zusammensetzung vorliegt.

7. Verfahren nach einem der vorstehenden Ansprüche, dadurch gekennzeichnet, daß das Mineralschmierölderivat ein Bright-Stock-Furfural-Extrakt ist.

8. Verfahren nach einem der vorstehenden Ansprüche, dadurch gekennzeichnet, daß das Mineralschmierölderivat im Bereich von 30 bis 99 Gew.-% der Zusammensetzung verwendet wird.

9. Verfahren nach einem der vorstehenden Ansprüche, dadurch gekennzeichnet, daß ein inerter Füller in die Zusammensetzung aufgenommen wird.

10. Verfahren zur Herstellung eines pigmentierten Oberflachenüberzugs- oder -dichtungsmaterials, gekennzeichnet durch Vermischen des pigmentierbaren Bindemittels nach einem der vorstehenden Ansprüche mit einem Pigment und einem Mineralaggregat oder Füller.

## Revendications (Revendications pour l'(les) Etat(s) contractant(s) suivant(s): DE, GB, FR, IT, NL, SE, CH, LI, BE, AT, LU, GR)

1. Une composition de liant pigmentable, comportant un dérivé d'huile minérale lubrifiante et une résine de type hydrocarbure modifiée, renfermant des groupes acide carboxylique, anhydride d'acide carboxylique ou hydroxyle, caractérisée en ce que la composition renferme également, en tant qu'autre composant, un homopolymère ou copolymère amorphe d'une alpha-oléfine.

2. Composition de liant telle que revendiquée dans la revendication 1, dans laquelle l'autre composant est un polypropylène atactique, un copolymère amorphe de propylène, butène-1 et, facultativement, une proportion plus faible d'éthylène, ou bien des mélanges de ceux-ci.

3. Composition de liant telle que revendiquée dans la revendication 1 ou 2, caractérisée en ce que la quantité de polymères alpha-oléfiniques amorphes se situe dans la gamme de 5 à 40% en poids de la composition.

4. Composition de liant telle que revendiquée dans la revendication 1, 2 ou 3, caractérisée en ce que la résine de type hydrocarbure est une résine de pétrole ou une résine de coumarone-indène.

5. Composition de liant telle que revendiquée dans la revendication 4, caractérisée en ce que le composant résineux présente un indice d'acide dans la gamme de 1 à 100 mg de KOH/g.

6. Composition de liant telle que revendiquée dans l'une quelconque des revendications 1 à 5, caractérisée en ce que le composant résineux est présent dans la gamme de 1 à 70% en poids de la composition.

7. Composition de liant telle que revendiquée dans l'une quelconque des revendications précédentes, caractérisée en ce que le dérivé d'huile minérale lubrifiante est un extrait de furfural de Bright-Stock.

8. Composition de liant telle que revendiquée dans l'une quelconque des revendications précédentes, caractérisée en ce que le dérivé d'huile minérale lubrifiante est utilisée dans la gamme de 30 à 99% en poids de la composition.

9. Composition de liant telle que revendiquée dans l'une quelconque des revendications précédentes, caractérisée en ce qu'une charge inerte est incorporée dans la composition.

10. Un matériau d'étanchéité ou de revêtement de surface pigmenté, caractérisé en ce qu'il est constitué d'un mélange d'un agent liant pigmentable revendiqué dans l'une quelconque des revendications précédentes, d'un pigment et d'un agrégat minéral ou d'une charge minérale.

## Revendications (Revendications pour l'(les) Etat(s) contractant(s) suivant(s): ES)

1. Un procédé pour la préparation d'une composition de liant pigmentable, qui consiste à mélanger un dérivé d'huile lubrifiante minérale, une résine de type hydrocarbure modifiée, renfermant des groupes acide carboxylique, anhydride d'acide carboxylique ou hydroxyle, et, comme autre composant, un homopolymère ou copolymère amorphe d'une alpha-oléfine.

2. Un procédé tel que revendiqué dans la revendication 1, dans lequel l'autre composant est un polypropylène atactique, un copolymère amorphe de propylène, butène-1 et, facultativement, une proportion plus faible d'éthylène, ou bien des mélanges de ceux-ci.

3. Un procédé tel que revendiqué dans la revendication 1 ou 2, caractérisé en ce que la quantité de polymères alpha-oléfiniques amorphes se situe dans la gamme de 5 à 40% en poids de la composition.

4. Un procédé tel que revendiqué dans la revendication 1, 2 ou 3, caractérisé en ce que la résine de type hydrocarbure est une résine de pétrole ou une résine de coumarone-indène.

5. Un procédé tel que que revendiqué dans la revendication 4, caractérisé en ce que le composant résineux présente un indice d'acide dans la gamme de 1 à 100 mg de KOH/g.

6. Un procédé tel que revendiqué dans l'une quelconque des revendications 1 à 5, caractérisé en ce que le composant résineux est présent dans la gamme de 1 à 70% en poids de la composition.

7. Un procédé tel que revendiqué dans l'une quelconque des revendications précédentes, caractérisé en ce que le dérivé d'huile minérale lubrifiante est un extrait de furfural de Bright-Stock.

8. Un procédé tel que revendiqué dans l'une quelconque des revendications précédentes, caractérisé en ce que le dérivé d'huile minérale lubrifiante est utilisée dans la gamme de 30 à 99% en poids de la composition.

9. Un procédé tel que revendiqué dans l'une quelconque des revendications précédentes, caractérisé en ce qu'une charge inerte est incorporée dans la composition.

10. Un procédé pour la préparation d'un matériau d'étanchéité ou de revêtement de surface pigmenté, caractérisé en ce que l'on mélange un agent liant pigmentable revendiqué dans l'une quelconque des revendications précédentes, avec un pigment et un agrégat minéral ou une charge minérale.
